# EUROPEAN PATENT APPLICATION

(11) **EP 0 697 301 A1**
(43) Date of publication of application: **21.02.1996**
(21) Application number: 95110713.5
(22) Date of filing: 10.07.1995
(51) Int. Cl.: B60K 31/00

(54) **Method for limiting the speed of a motor vehicle to a prescribed speed and apparatus for performing said method**

(30) Priority: 18.07.1994 IT BO940338
(71) Applicant: Maccaferri, Paolo, I-40069 Zola Predosa (Bologna) (IT)
(72) Inventor: Maccaferri, Paolo, I-40069 Zola Predosa (Bologna) (IT)
(74) Representative: Modiano, Guido, Dr.-Ing.

(57) **Abstract**

A method for limiting the speed of a motor vehicle travelling on a road on which a speed limit is prescribed, comprising:
-- placement, along the road, of at least one transmitter of at least one radio signal (KA..KF) having a fixed frequency corresponding to the prescribed speed;
-- installation (P), inside the vehicle travelling on the road, of a receiver (RA..RF) tuned to receive only the fixed-frequency signal (KA..KF) transmitted by the transmitter and provide a signal indicating the resulting frequency and therefore the prescribed speed; of means (T) for measuring the instantaneous speed of the motor vehicle and generating a signal indicating the instantaneous speed; of means (IA..IF,I1..I6) for correlating the signal indicating the prescribed speed to the signal indicating the instantaneous speed of the motor vehicle; and of adjustment (D) means controlled by the correlation means (IA..IF,I1..I6) to adjust the speed of the motor vehicle, so that the adjustment means (D) operate so as to reduce the speed of the motor vehicle below the prescribed speed when the instantaneous speed is higher than the prescribed one.

## Description

The present invention relates to a method for limiting the speed of a motor vehicle to the speed prescribed on a road and to an apparatus for performing this method.

It is known that road codes regarding car traffic set speed limits on roads and highways.

Unlawful passing of these speed limits by users, while being sometimes forced by traffic requirements, is nevertheless due almost exclusively to the undisciplined behavior of drivers willing to transgress.

However, there are circumstances in which even the prescribed speed limits are too high to offer the necessary assurances of safety to people using roads and highways. This is the case, for example, when visibility is reduced by fog or smoke, or when the road becomes slippery due to rain or snow, or in situations requiring slow driving of motor vehicles due to accidents or road work.

The aim of the present invention is therefore to provide a method that allows to limit the maximum allowed speed of a motor vehicle travelling on a road or highway on which there is a speed limit and avoid all the drawbacks caused by disregard for prescribed speed limits.

Within the scope of this aim, an object of the present invention is to provide a method that is highly flexible in use in relation to the possibility of varying the maximum allowed speed according to the traffic situation and to the contingent environmental conditions.

This aim, this object and others are achieved with a method for limiting the speed of a motor vehicle travelling on a road on which a speed limit is prescribed, characterized in that it comprises:
-- placement, along said road, of at least one transmitter of at least one radio signal having a fixed frequency corresponding to said prescribed speed;
-- installation, inside the vehicle travelling on said road, of a receiver that is tuned to receive only said fixed-frequency signal transmitted by said transmitter and provide a signal indicating the resulting frequency and therefore the prescribed speed; of means for measuring the instantaneous speed of the motor vehicle and generating a signal indicating the instantaneous speed; of means for correlating said signal indicating the prescribed speed to said signal indicating the instantaneous speed of the motor vehicle; and of adjustment means that are controlled by said correlation means to adjust the speed of the motor vehicle, so that said adjustment means operate so as to reduce the speed of the motor vehicle below the prescribed speed when the instantaneous speed is higher than the prescribed one.

Another object of the present invention is to provide an apparatus that allows to apply said method in practice.

This object is achieved with an apparatus for limiting the speed of a motor vehicle travelling on a road on which a speed limit is prescribed, characterized in that it comprises at least one transmitter for at least one radio signal having a fixed frequency corresponding to said maximum prescribed speed, said transmitter being placed along said road; said motor vehicle being equipped with: a receiver tuned to receive said fixed-frequency signal transmitted by said transmitter and to provide a signal indicating the received frequency and therefore the prescribed speed; means for detecting the instantaneous speed of the motor vehicle and for generating a signal indicating the instantaneous speed; means for correlating said signal indicating the prescribed speed to said signal indicating the instantaneous speed of the motor vehicle; and adjustment means controlled by said correlation means to adjust the speed of the motor vehicle, so that said adjustment means operate so as to reduce the speed of the motor vehicle below the prescribed speed when the instantaneous speed is higher than the prescribed one.

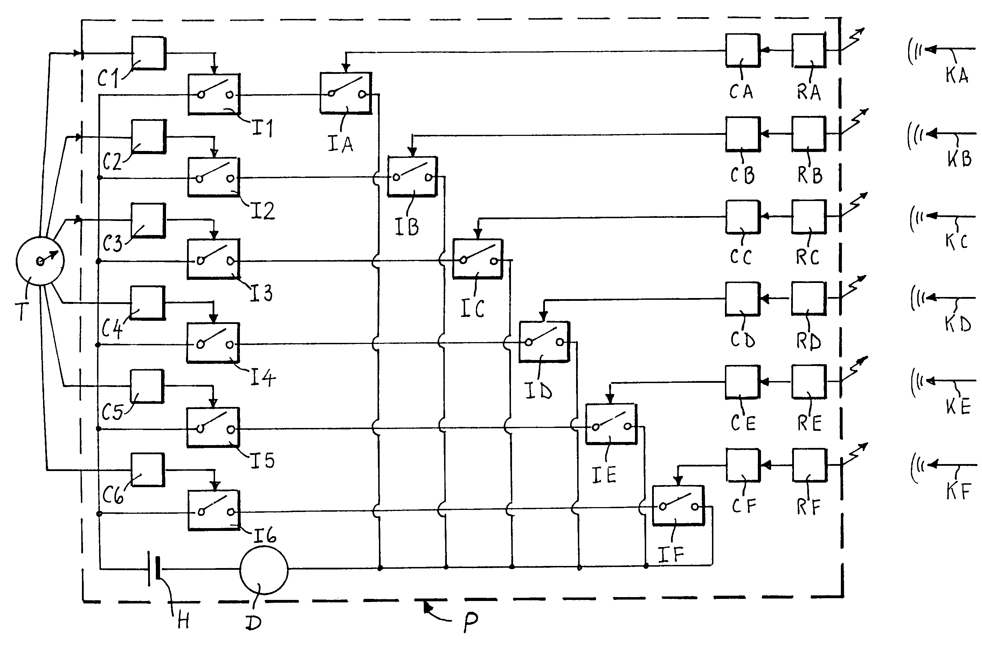

Further features and advantages of the present invention will become apparent from the following detailed description of an embodiment illustrated only by way of non-limitative example in the accompanying drawing, wherein:
the only figure is a schematic view of an apparatus preset for adjusting at a multiplicity of levels the maximum speed allowed to a vehicle.

With reference to the above mentioned figure, P designates the part of the apparatus that is installed on the motor vehicle the speed whereof is to be controlled.

RA...RF designate a plurality of radio receivers, each of which is quartz-locked to a respective frequency of a signal KA...KF transmitted by a plurality of radio transmitters. Said transmitters (not shown in the drawing since of a known type) are placed along the road section where the motor vehicle must not exceed a prescribed maximum speed.

The transmitters are of course spaced so that the signal is received by the receivers uninterruptedly over the entire length of the road section involved.

Respective circuits CA...CF are associated with the receivers RA...RF and control respective switches IA...II when there is a match between the frequency of the transmitted signal and the tuning frequency of the receiver. For example, if the frequency is KB, only the switch IB will be activated, whereas the other switches will remain passive.

The switches IA...II are correlated with an equal number of switches I1...I6 controlled by respective circuits C1...C6 for measuring the speed of the motor vehicle. To allow this measurement, the circuits C1...C6 are operatively associated for example with the speedometer T, so that all the switches I1...I6 correlated to the speeds below the travel speed of the motor vehicle are activated.

The switches I1...I6 and IA...II control an actuator D connected to a power supply H that is adapted to adjust the speed of the motor vehicle only when there is a correlation between the switches of the series I1...I6 and IA...II, that is to say, when a switch of the series IA...II and one of the series I1...I6 are both in closed position.

The actuator D can be of any kind, so long as it is capable of affecting the speed of the motor vehicle.

Thus, for example, it can consist of a pneumatically-or hydraulically-driven servo-motor acting on the braking circuit so as to decelerate the motor vehicle.

In a second version, the actuator can be a valve that controls the flow of the gaseous combustion mix that enters the cylinders of the engine.

A third possibility is constituted by a device that intervenes in the ignition system, temporarily deactivating one or more cylinders.

The operation of the described apparatus is as follows.

Assume that the apparatus has been installed along a road section in which the maximum prescribed speed is VC. At this speed the transmitters that transmit the signal having frequency KC are activated.

When a motor vehicle travels along this road section at a speed under VC, the switch IC is closed, and so are the switches I1, I2 that precede I3. On the other hand, the switches IA-IB, ID, IE, IF, and I3, I4, I5, I6 are open. In this manner, since all the circuits are open, either because IA, IB, ID, IE and IF are open or because I3 is open, the actuator D is disconnected from the power supply and the motor vehicle can travel normally. Only if the speed of the vehicle increases until it reaches and exceeds VC, the speedometer indication will cause the closing of the switch I3 and therefore the activation of the actuator D through the already closed circuit IC and the deceleration of the motor vehicle to a speed under VC.

When the speed has dropped below VC, the switch I3 opens again and the actuator D is disconnected, allowing the motor vehicle to travel at a speed below the prescribed one.

If the prescribed speed is reduced, for example from VF (which corresponds to the frequency KF) to VC (which corresponds to the frequency KC), the switch IF opens and the switch IC closes. Therefore, the actuator D is supplied through the switches IC and I3, so as to decelerate the motor vehicle until it reaches the speed VC; thereafter the switch I3 opens and, by opening the actuator supply circuit, interrupts the deceleration of the motor vehicle and maintains the speed VC.

In a preferred embodiment of the apparatus, to prevent the deceleration of the motor vehicle from continuing until it reaches excessively low speeds, the closing time of the switches I1-I6 is controlled by timers that control their opening.

It is evident that the described apparatus fully achieves the intended aim and objects.

In particular, the speed of the motor vehicle can be set at any time simply by varying the frequency KA...KF.

It is thus possible to affect the speed of motor vehicles on roads and highways so as to adapt it to the intensity of the traffic and to emergency situations, and keep it within maximum safety limits.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. Method for limiting the speed of a motor vehicle travelling on a road on which a speed limit is prescribed, characterized in that it comprises:
-- placement, along said road, of at least one transmitter of at least one radio signal having a fixed frequency corresponding to said prescribed speed;
-- installation, inside the vehicle travelling on said road, of a receiver that is tuned to receive only said fixed-frequency signal transmitted by said transmitter and provide a signal indicating the resulting frequency and therefore the prescribed speed; of means for measuring the instantaneous speed of the motor vehicle and generating a signal indicating the instantaneous speed; of means for correlating said signal indicating the prescribed speed to said signal indicating the instantaneous speed of the motor vehicle; and of adjustment means that are controlled by said correlation means to adjust the speed of the motor vehicle, so that said adjustment means operate so as to reduce the speed of the motor vehicle below the prescribed speed when the instantaneous speed is higher than the prescribed one.

2. Apparatus for limiting the speed of a motor vehicle travelling along a road where a speed limit is prescribed, characterized in that it comprises at least one transmitter for at least one radio signal (KA-KF) having a fixed frequency corresponding to a maximum prescribed speed, said transmitter being placed along said road; said motor vehicle being equipped with: at least one receiver (RA-RF) tuned to receive said fixed-frequency signal (KA-KF) transmitted by said transmitter and to provide a signal indicating the received frequency and therefore the prescribed speed; means for detecting (I) the instantaneous speed of the motor vehicle and for generating a signal indicating the instantaneous speed; means for correlating (I1-I6,IA-IF) said signal indicating the prescribed speed to said signal indicating the instantaneous speed of the motor vehicle; and adjustment means (D) controlled by said correlation means to adjust the speed of the motor vehicle, so that said adjustment means (D) operate so as to reduce the speed of the motor vehicle below the prescribed speed when the instantaneous speed is higher than the prescribed one.

3. Apparatus according to claim 2, characterized in that said correlation means comprise: first circuits (CA-CF) that are associated with said receivers (RA-RF) and are adapted to activate respective first switches (IA-IF), each of which is correlated to one of several prescribed speeds; and second circuits (C1-C6) for measuring the instantaneous speed of the motor vehicle that are adapted to activate respective second switches (I1-I6); said first and second switches being adapted to activate said adjustment means (D) when the instantaneous speed exceeds said prescribed speed.

4. Apparatus according to claim 3, characterized in that said adjustment means are constituted by an actuator (D) acting on the braking system or on the induction of the combustion mix or on the ignition system.

5. Apparatus according to one of the preceding claims, characterized in that the intervention time of said switches (I1-I6) is adjusted by timers.
